(19)

Europäisches
Patentamt
European
Patent Office
Office européen
des brevets

(11) **EP 1 964 719 A2**

(12) **EUROPEAN PATENT APPLICATION**

(43) Date of publication:
**03.09.2008 Bulletin 2008/36**

(51) Int Cl.:
*B60R 1/00* (2006.01)       *G06T 3/00* (2006.01)
*G06T 7/00* (2006.01)       *H04N 7/18* (2006.01)

(21) Application number: **08003510.8**

(22) Date of filing: **26.02.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **28.02.2007 JP 2007049157**

(71) Applicant: **Sanyo Electric Co., Ltd.
Moriguchi-shi, Osaka (JP)**

(72) Inventor: **Hongo, Hitoshi
Moriguchi City
Osaka 570-8677 (JP)**

(74) Representative: **Glawe, Delfs, Moll
Patentanwälte
Postfach 26 01 62
80058 München (DE)**

(54) **Apparatus and method for monitoring a vehicle's surroundings**

(57)     A vehicle (3) surroundings monitoring apparatus has: a point-of-view converter that converts an image shot with a camera (2) installed on a vehicle (3) into a bird's-eye-view image through point-of-view conversion; a position adjuster that performs position adjustment between two bird's-eye-view images produced from two images shot at different time points, the position adjuster performing the position adjustment based on the two bird's-eye-view images; and a three-dimensional object detector that detects a three-dimensional object around the vehicle based on differences between the two bird's-eye-view images having undergone the position adjustment.

FIG.2A

# FIG.2B

FRONTWARD

**Description**

**BACKGROUND OF THE INVENTION**

1. Field of the Invention

The present invention relates to an apparatus and a method for monitoring the surroundings of a vehicle by use of a camera.

2. Description of Related Art

One method of detecting an obstacle around a vehicle by use of a car-mounted camera employs a stereo camera. A stereo camera allows measurement of the distance to an obstacle. Thus, detection of a vehicle or pedestrian present frontward is often achieved by use of a stereo camera.

A stereo camera is composed of two cameras, and therefore merely using one incurs increased cost. Moreover, a stereo camera needs adjustment of a baseline according to the distance to an obstacle, and this adjustment requires extremely high-accuracy calibration on two cameras. Specifically, the fitting position and angle of two cameras need to be adjusted with extremely high accuracy, and this makes introduction of a stereo camera troublesome. Moreover, vibration or the like of a vehicle may get the position and angle of cameras out of arrangement, making it high likely that, with use, the accuracy of obstacle detection deteriorates.

Against this background, there has been sought a method of detecting an obstacle by use of a single-lens (non-strereo) camera. One method of detecting an obstacle with a single-lens (non-strereo) camera employs pattern recognition to detect a vehicle present frontward as an obstacle. With previously acquired camera parameters (such as camera installation conditions), it is possible to estimate, based on the location of a vehicle present frontward as observed on an image, the vehicle-to-vehicle distance.

Japanese Patent No. 3494434 proposes a method (hereinafter "first conventional method") that works in the following manner. As a vehicle travels, by use of a single-lens (non-stereo) camera, images around the vehicle at different locations - a first and a second location - are shot as a first and a second image with chronologically different parallaxes. Then, by use of a combination of a rudder angle sensor with a wheel speed sensor as accessed via a pulse counter - all fitted to the vehicle, travel data, that is, data on the travel of the vehicle from the first to the second location, is obtained. Then, based on the travel data, the first image is converted, by being projected onto the second location, into a third image and then, based on differences between the third and second images, an obstacle is detected.

Japanese Patent No. 3463858 proposes a method (hereinafter "second conventional method") that works in the following manner. As in the first conventional method, also in the second conventional method, by use of a speed detecting device, speed data, that is, data on the speed of a vehicle (one's own vehicle), is obtained. Then, based on the speed data, an optical flow is found between images at different time points, and thereby an approaching obstacle is detected.

Inconveniently, however, the method employing pattern recognition is poor at recognizing unlearned patterns, and therefore lacks in flexibility.

With the first conventional method, it is difficult to detect the distance of travel of the vehicle accurately; thus, the travel data obtained from the rudder angle sensor and the wheel speed sensor contains a comparatively large error. As a result, a difference may arise even in a part of the compared images where no obstacle is actually present, leading to high likeliness to erroneously detect an obstacle. Moreover, the use of dedicated sensors (the rudder angle sensor and the wheel speed sensor) incurs increased cost. Likewise, using a dedicated sensor (the speed detecting device), the second conventional method suffers from similar inconveniences.

**SUMMARY OF THE INVENTION**

It is therefore an object of the present invention to provide a vehicle surroundings monitoring apparatus and a vehicle surroundings monitoring method that, without requiring a dedicated sensor, can reliably detect a three-dimensional object that threatens to be an obstacle to a vehicle.

According to one aspect of the invention, a vehicle surroundings monitoring apparatus is provided with: a point-of-view converter that converts an image shot with a camera installed on a vehicle into a bird's-eye-view image through point-of-view conversion; a position adjuster that performs position adjustment between two bird's-eye-view images produced from two images shot at different time points, the position adjuster performing the position adjustment based on the two bird's-eye-view images; and a three-dimensional object detector that detects a three-dimensional object around the vehicle based on differences between the two bird's-eye-view images having undergone the position adjustment.

With this configuration, there is no need for a dedicated sensor. Thus, naturally, there occurs no erroneous detection of a three-dimensional object ascribable to an error originating from such a sensor. Consequently, it is possible to reliably detect a three-dimensional object that threatens to be an obstacle. In addition, disuse of a dedicated sensor contributes to reduced cost.

Specifically, for example, when, in each of the two bird's-eye-view images, a region thereof where a subject comparatively far from the vehicle appears is called a first image region and a region thereof where a subject comparatively near to the vehicle appears is called a second image region, the position adjuster excludes, from the image data with which it performs the position adjustment between the two bird's-eye-view images, the image data of the first image region of each of these images, and performs the position adjustment between the two bird's-eye-view images based on the image data of the second image region of each of these images.

With this configuration, it is possible to detect a three-dimensional object without being affected by a three-dimensional object that threatens to be an obstacle.

For example, based on the differences between the two bird's-eye-view images having undergone the position adjustment, the three-dimensional object detector not only detects the three-dimensional object but also recognizes whether the three-dimensional object is a stationary or moving object.

With this configuration, it is possible to promote assistance in safety confirmation.

Specifically, for example, based on the differences, the three-dimensional object detector identifies a three-dimensional object region where the three-dimensional object appears in each of the two bird's-eye-view images having undergone the position adjustment and, based on the distance of movement of a particular point in the three-dimensional object region between the two bird's-eye-view images having undergone the position adjustment, recognizes whether the three-dimensional object is a stationary or moving object.

For example, the particular point is a point in the three-dimensional object region which is nearest to the vehicle.

For example, the vehicle surroundings monitoring apparatus is further provided with: a warning indicator that sends off a warning indication based on the result of detection by the three-dimensional object detector. Here, the warning indicator sends off different warning indications depending on whether the detected three-dimensional object is a stationary or moving object.

For example, the vehicle surroundings monitoring apparatus is further provided with: a danger evaluator that evaluates the level of danger that the three-dimensional object poses to the vehicle; and a warning indicator that sends off a warning indication according to the evaluated level of danger. Here, the danger evaluator evaluates the level of danger based on one or more of: the result of recognizing whether the three-dimensional object is a stationary or moving object; the direction of movement of the three-dimensional object relative to the vehicle as detected on the two bird's-eye-view images having undergone the position adjustment; the speed of movement of the three-dimensional object relative to the vehicle as detected on the two bird's-eye-view images having undergone the position adjustment; the position of the three-dimensional object relative to the vehicle as detected on a bird's-eye-view image in which the three-dimensional object appears; and the size of the three-dimensional object as observed on a bird's-eye-view image in which the three-dimensional object appears.

For example, the vehicle surroundings monitoring apparatus is further provided with: a vehicle travel condition estimator that estimates the travel condition of the vehicle based on the result of the position adjustment that the position adjuster has performed on the two bird's-eye-view images. Here, the position adjuster, when performing position adjustment on another two bird's-eye-view images acquired after acquisition of the two bird's-eye-view images, imposes as a condition for the position adjustment of the newly acquired two bird's-eye-view images a restriction according to the estimated travel condition.

With this configuration, it is possible to reduce erroneous detection of a three-dimensional object as threatening to be an obstacle.

According to another aspect of the invention, a vehicle is provided with any one of the vehicle surroundings monitoring apparatuses configured as described above.

According to yet another aspect of the invention, a vehicle surroundings monitoring method involves: converting an image shot with a camera installed on a vehicle into a bird's-eye-view image through point-of-view conversion; performing position adjustment between two bird's-eye-view images produced from two images shot at different time points, the position adjustment being performed based on the two bird's-eye-view images; and detecting a three-dimensional object around the vehicle based on differences between the two bird's-eye-view images having undergone the position adjustment.

Thus, according to the invention, it is possible to provide a vehicle surroundings monitoring apparatus and a vehicle surroundings monitoring method that, without requiring a dedicated sensor, can reliably detect a three-dimensional object that threatens to be an obstacle to a vehicle.

The significance and benefits of the invention will be clear from the following description of its embodiments. It should however be understood that these embodiments are merely examples of how the invention is implemented, and that the meanings of the terms used to describe the invention and its features are not limited to the specific ones in which they are used in the description of the embodiments.

## BRIEF DESCRIPTION OF THE DRAWINGS

Fig. 1 is a functional block diagram of a vehicle surroundings monitoring apparatus according to the invention.
Fig. 2A is a side exterior view of a vehicle equipped with the vehicle surroundings monitoring apparatus of Fig. 1 and fitted with a camera, and Fig. 2B is a top exterior view of the vehicle.
Fig. 3 is a diagram showing an example of shot images and bird's-eye-view images at time points t and (t+1).
Fig. 4 is a diagram showing the result of position adjustment between the bird's-eye-view images shown in Fig. 3.
Fig. 5 is a diagram illustrating the position adjustment performed by the position adjuster shown in Fig. 1.
Fig. 6 is a diagram showing the structure of the obstacle information produced by the obstacle detector shown in Fig. 1.
Fig. 7A is a diagram showing bird's-eye-view images having undergone position adjustment, as observed when the detected obstacle is stationary, and Fig. 7B is a diagram showing bird's-eye-view images having undergone position adjustment, as observed when the detected obstacle is moving.
Figs. 8A and 8B are diagrams showing examples of the method by which the danger evaluator shown in Fig. 1 evaluates the level of danger.
Fig. 9 is a flow chart showing the overall flow of operations in the vehicle surroundings monitoring apparatus of Fig. 1.

## DETAILED DESCRIPTION OF PREFERRED EMBODIMENTS

Hereinafter, embodiments of the invention will be described specifically with reference to the accompanying drawings. Among the different drawings referred to in the course of description, the same parts are identified by common reference signs, and in principle no overlapping description of the same parts will be given.

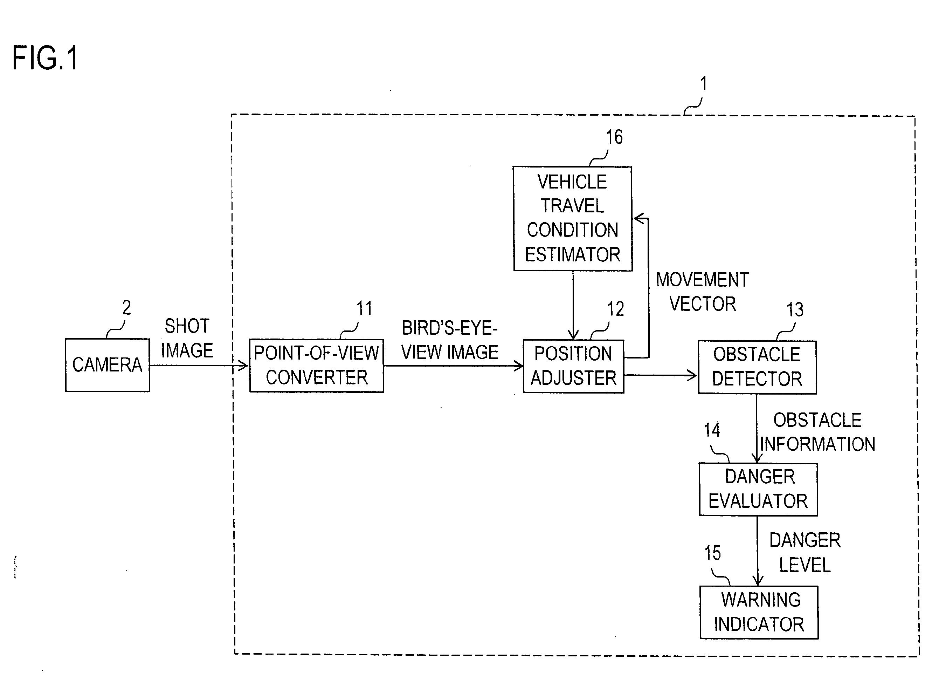

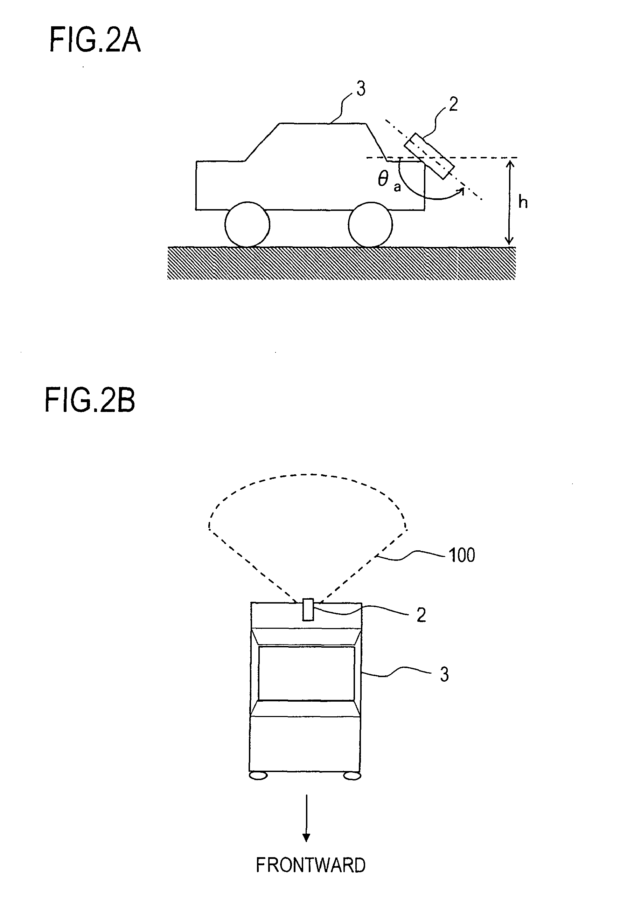

Fig. 1 is a functional block diagram of a vehicle surroundings monitoring apparatus 1 according to the invention. Fig. 2A is a side exterior view of a vehicle 3 equipped with the vehicle surroundings monitoring apparatus 1 and fitted with a camera 2, and Fig. 2B is a top exterior view of the vehicle 3. The vehicle 3 is assumed to be an automobile that either travels or stays at rest on the road surface. In Fig. 2B, a fan-shaped range 100 represents the shooting range of - the range shootable by - the camera 2 as seen from above. In the following description, it is assumed that what the term "road surface" denotes is the same as the ground, and that the term "height" denotes a height from the road surface.

The vehicle surroundings monitoring apparatus 1 shown in Fig.1 includes: a point-of-view converter 11 that performs point-of-view conversion on a shot image obtained from - an image shot by - the camera 2 to produce a bird's-eye-view image; a position adjuster (image merger) 12 that performs position adjustment between bird's-eye-view images at different time points; an obstacle detector 13 that detects an obstacle based on the result of the position adjustment and outputs obstacle information; a danger evaluator 14 that evaluates the level of danger based on the obstacle information; a warning indicator 15 that sends off a warning indication according to the level of danger; and a vehicle travel condition estimator 16 that estimates the travel condition of the vehicle 3 based on the result of the position adjustment.

The camera 2 is a single-lens (non-strereo) camera that is fitted to a rear part of the vehicle 3 to shoot a range behind the vehicle. The camera 2 may instead be fitted to a front or side part of the vehicle 3. The camera 2 is so installed that the shooting range thereof covers the road surface behind the vehicle 3 along with three-dimensional objects present thereabout (that is, with the optical axis of the camera 2 pointing rearward-downward of the vehicle 3). The camera 2 shoots subjects (including the road surface and three-dimensional objects) present behind the vehicle 3 every predetermined frame period (for example, every 1/60-second period) and feeds one thus shot image (hereinafter "shot image") after another to the point-of-view converter 11.

**Point-of-view Converter:** The point-of-view converter (viewpoint transformer) 11 converts a shot image from the camera 2 into a bird's-eye-view image (an image as seen from above) through point-of-view conversion (viewpoint transformation). In a bird's-eye-view image, an image actually shot by the camera 2 has been converted into an image as seen from a point of view of a virtual camera (a virtual point of view). More specifically, in a bird's-eye-view image, an image actually shot by the camera 2 has been converted into an image as seen when one looks perpendicularly down to the ground surface (in other words, an image that will be obtained when a shot image is projected onto the road surface). This type of image conversion is generally called point-of-view conversion.

Converting a shot image into a bird's-eye-view image through point-of-view conversion is called bird's-eye-view conversion. Bird's-eye-view conversion can be achieved by a well-known method. For example, bird's-eye-view conversion is performed by well-known perspective projection conversion as disclosed in, for example, JP-A-2006-287892 or JP-A-H3-099952. When the coordinates of points on a shot image are represented by $(x_{bu}, y_{bu})$, and the coordinates of points on a bird's-eye-view image obtained through perspective projection conversion of the shot image are represented by ($x_{au}$, $y_{au}$), then the conversion of the coordinates ($x_{bu}$, $y_{bu}$) to the coordinates ($x_{au}$, $y_{au}$) is expressed by formula (1) below.

$$\begin{bmatrix} x_{au} \\ y_{au} \end{bmatrix} = \begin{bmatrix} \dfrac{x_{bu}(fh\sin\theta_a + H_a y_{au}\cos\theta_a)}{fH_a} \\ \dfrac{fh(f\cos\theta_a - y_{bu}\sin\theta_a)}{H_a(f\sin\theta_a + y_{bu}\cos\theta_a)} \end{bmatrix} \tag{1}$$

Here, as shown in Fig. 2A, $\theta_a$ represents the angle formed between the ground and the optical axis of the camera 2 (where $90° < \theta_a < 180°$). The angle given by ($180° - \theta_a$) is the angle of depression of the camera 2. The symbol h represents a quantity depending on the height of the camera 2 (the translational displacement between the camera coordinate system and the world coordinate system). The symbol f represents the focal length of the camera 2. The symbol $H_a$ represents the height of the virtual camera. The parameters ($\theta_a$, h, f, and $H_a$) necessary for perspective projection conversion are, for example, previously determined and previously stored in the vehicle surroundings monitoring apparatus 1 (the point-of-view converter 11).

Bird's-eye-view conversion may be achieved by, instead of perspective projection conversion, planar projection conversion as disclosed in JP-A-2006-148745. In a case where planar projection conversion is used, within the shooting range of the camera 2, four or more characteristic points are arranged whose coordinates in a bird's-eye-view image are previously known, and, based on information on the coordinates of those four or more characteristic points on a shot image, a homography matrix is determined. By use of this homography matrix, any shot image can be converted into a bird's-eye-view image.

Position Adjuster: Next, the function of the position adjuster 12 shown in Fig. 1 will be described. One bird's-eye-view image after another produced by the point-of-view converter 11 is fed to the position adjuster 12. The position adjuster 12 performs position adjustment between two temporally consecutive bird's-eye-view images. Now, consider a given - reference - time point t and the time points that come every above-mentioned frame period - unit length of time - thereafter such that the camera 2 captures a shot image at each of time points t, (t+1), (t+2), ....

The bird's-eye-view images produced from the shot images at time points t, (t+1), (t+2), ... are called the bird's-eye-view images at time points t, (t+1), (t+2), ... respectively. Now, with attention concentrated on time points t and (t+1), the method by which position adjustment is performed between the bird's-eye-view images at time points t and (t+1) will be described. Here, it is assumed that, as time passes via time points t and (t+1), the vehicle 3 is traveling in the real space.

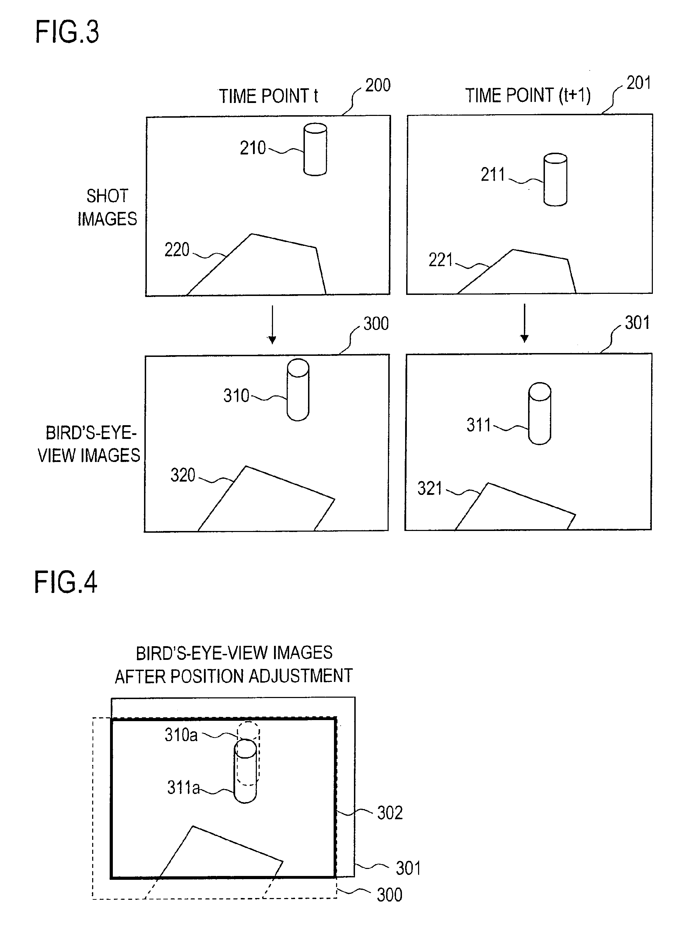

Fig. 3 shows an example of the shot images and the bird's-eye-view images at time points t and (t+1). In Fig. 3, the bottom end of each image (each of the shot and bird's-eye-view images) corresponds to the side to which the vehicle 3 is located. In Fig. 3, the reference signs 200 and 201 indicate the shot images at time points t and (t+1) respectively, and the reference signs 300 and 301 indicate the bird's-eye-view images at time points t and (t+1) respectively.

Suppose now that a heightless flat sign is drawn on the road surface within the shooting range of the camera 2, and also that a three-dimensional object, with a certain height, is present within the shooting range of the camera 2. The flat sign is, for example, a white line or any other traffic sign painted on the road surface. The three-dimensional object is regarded as an obstacle to the vehicle 3, and is henceforth called as such. For the sake of convenience of description, it is here assumed that only one obstacle is present. The flat sign is fixed on the road surface and stays stationary in the real space. On the other hand, the obstacle may be either a stationary object, such as a pole planted at a fixed place in a parking lot, or a moving object, such as a human. In a case where the obstacle is a moving object, it can move in the real space. Fig. 3 assumes a case where the obstacle is moving straight toward the camera 2 and the vehicle 3.

In Fig. 3, the reference sign 210 indicates the obstacle as it appears on the shot image 200, and the reference sign 220 indicates the flat sign as it appears on the shot image 200. Likewise, the reference sign 211 indicates the obstacle as it appears on the shot image 201, and the reference sign 221 indicates the flat sign as it appears on the shot image 201. Likewise, the reference sign 310 indicates the obstacle as it appears on the bird's-eye-view image 300, and the reference sign 320 indicates the flat sign as it appears on the bird's-eye-view image 300. Likewise, the reference sign 311 indicates the obstacle as it appears on the bird's-eye-view image 301, and the reference sign 321 indicates the flat sign as it appears on the bird's-eye-view image 301.

The position adjuster 12 performs position adjustment between two bird's-eye-view images that are currently targeted for position adjustment (in the example under discussion, the bird's-eye-view images 300 and 301). Here, whereas the heightless flat sign appears in an identical position without a displacement, the obstacle appears displaced from each other. This is because, although the image of the obstacle as projected onto the bird's-eye-view image appears on both of the bird's-eye-view images, the viewpoint of the virtual camera moves between time points t and (t+1), during which period the vehicle 3 continues to travel; thus, as a matter of principle, the projected image (the shape thereof) changes accordingly between time points t and (t+1). Thus, by performing position adjustment between two bird's-eye-view images based on heightless flat sign or the like, it is possible to detect an obstacle based on differences between the two bird's-eye-view images having undergone the position adjustment. Incidentally, in a case where the vehicle 3 is at rest and the obstacle also is at rest, it is impossible to detect the obstacle based on such differences; by contrast, in a case where the vehicle 3 is at rest but the obstacle is moving, it is possible to detect the obstacle based on such differences.

Fig. 4 is a diagram showing the bird's-eye-view images 300 and 301 having undergone position adjustment by the position adjuster 12, as they appear when overlaid on each other. The portion of the bird's-eye-view images 300 and 301 where they overlap after the position adjustment is called the overlapping portion. In Fig. 4, the overlapping portion is indicated as a region enclosed by thick lines 302. Inside the overlapping portion, whereas the flat sign appears in an identical position without a displacement, the obstacle appears in different regions. In Fig. 4, broken lines 310a indicate the obstacle as it appears on the bird's-eye-view image 300 after position adjustment, and solid lines 311a indicate the obstacle as it appears on the bird's-eye-view image 301 after position adjustment.

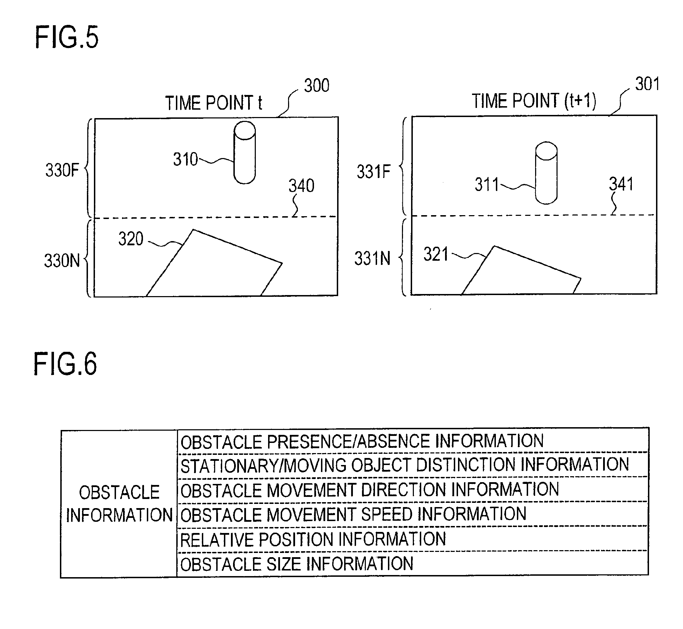

The position adjuster 12 performs position adjustment based on the image data of an image region where a heightless subject appears, and this helps achieve position adjustment less affected by an obstacle. Now, a specific method for realizing this will be described with reference to Fig. 5. Fig. 5 shows bird's-eye-view images 300 and 301 like those shown in Fig. 3.

Consider the entire image region of each bird's-eye-view image to be dividable into a far-side image region in which a subject located comparatively far from - at a comparatively long distance from - the vehicle 3 (as measured in the real space) and a near-side image region in which a subject located comparatively near to - at a comparatively short distance from - the vehicle 3 (as measured in the real space). Since the bottom end of each image (each of the shot and bird's-eye-view images) corresponds to the side to which the vehicle 3 is located as described previously, in a bird's-eye-view image, a far-side image region occupies an upper part and a near-side image region occupies a lower part. Fig. 5 shows how each bird's-eye-view image is divided into a far-side and a near-side image region. Specifically, the bird's-eye-view image 300 is divided into a far-side image region 330F occupying an upper part and a near-side image region 330N occupying a lower part, and the bird's-eye-view image 301 is divided into a far-side image region 331F occupying an upper part and a near-side image region 331N occupying a lower part.

The position adjuster 12 determines the movement vector between the image (hereinafter "first reference image") inside the near-side image region 330N in the bird's-eye-view image 300 and the image (hereinafter "second reference image") inside the near-side image region 331N in the bird's-eye-view image 301. This movement vector identifies the direction and magnitude of the movement between the first and second reference images. And, base on this movement vector, the position adjuster 12 performs position adjustment between the bird's-eye-view images 300 and 301. For example, in a case where the bird's-eye-view image 300 is used as a reference, the movement vector from the first to the second reference image relative to the first reference image is determined, and coordinate conversion is performed such that the bird's-eye-view image 301 is moved translationally according to this movement vector. Then, the bird's-eye-view image 300, on one hand, and the bird's-eye-view image 301 having undergone the coordinate conversion, on the other, are taken as bird's-eye-view images having undergone position adjustment. In this way, in the position adjustment between the bird's-eye-view images 300 and 301, the image data of the far-side image regions 330F and 331F is not used.

As will be described also later, when an obstacle approaches the vehicle 3, a warning indication is sent off so that, in response to the warning indication, the driver will stop the vehicle 3. Accordingly, while the vehicle 3 is traveling, normally no obstacle should be present in the rear vicinity of the vehicle 3. It is in view of this that position adjustment is performed based solely on the image data inside the near-side image regions.

The movement vector is determined by a well-known method. For example, it can be determined by image matching (such as representative point matching or block matching). Alternatively, by use of an edge extraction filter or the like, a plurality of characteristic points for position adjustment that are effective in deriving a movement vector are extracted from the first reference image; then, the positions (coordinates) on the second reference image at which those characteristic points for position adjustment are located are searched for - in this way, the movement vector may be derived. Here, characteristic points for position adjustment denote points that contain comparatively high degrees of edge or the like and are thus characteristic enough to be easily searched for. For example, an edge extraction filter is applied to one pixel after another of the first reference image so that pixels at which the edge extraction filter outputs a value equal to or larger than a predetermined value will be taken as characteristic points for position adjustment.

The position of the border line (corresponding to reference signs 340 and 341 in Fig. 5) across which each bird's-eye-view image is divided into a far-side image region and a near-side image region may be previously set. In that case, the position adjuster 12 determines the movement vector based on the image data inside the previously set region in each bird's-eye-view image.

Here, the movement vector may be determined in the following manner. By use of an edge extraction filter or the like, characteristic points for position adjustment are searched for in the first reference image, starting at the bottom end thereof. This search is continued until a predetermined number of characteristic points for position adjustment have been found so that, ultimately a plurality of characteristic points for position adjustment (the just-mentioned predetermined number of characteristic points) will be extracted. Then, the positions (coordinates) on the second reference image at which the thus extracted characteristic points for position adjustment are located are searched for, and thereby the movement vector is derived. In this case, no concept of a border line as mentioned above is involved, but eventually the image data inside far-side image regions is excluded from the image data with which the position adjustment between two bird's-eye-view images is performed, so that the movement vector for position adjustment is determined based solely on the image data inside near-side image regions.

As shown in Fig. 1, the position adjuster 12 also receives the result of estimation by the vehicle travel condition estimator 16; how it uses it will be described later.

**Obstacle Detector:** Next, the function of the obstacle detector 13 shown in Fig. 1 will be described. The obstacle detector 13 receives the bird's-eye-view images having undergone position adjustment. Alternatively, the bird's-eye-view images produced by the point-of-view converter 11 and the movement vector determined by the position adjuster 12 may be fed to the obstacle detector 13 so that the obstacle detector 13 will then produce bird's-eye-view images having undergone position adjustment.

For the sake of concrete description, the following description of the function of the obstacle detector 13 proceeds with attention concentrated on the two bird's-eye-view images at time points t and (t+1). A bird's-eye-view image having undergone position adjustment will be called a "position-adjusted image"; a bird's-eye-view image at time point t after position adjustment will be called a "position-adjusted image at time point t", and those at other time points (such as (t+1)) will be called likewise.

The obstacle detector 13 identifies differences between the position-adjusted images at time points t and (t+1), and detects the image region where the differences are present as a region where an obstacle appears. More specifically, for example, a differential image between the position-adjusted images at time points t and (t+1) is produced, and a region in the differential image where the value of density is equal to or larger than a predetermined value is extracted as a differential region. Alternatively, the differential image is divided into a region that contains many pixels with values of density equal to or larger than a predetermined value and the other region, and the former region is extracted as a differential region. The differential image is produced only with respect to the overlapping portion between the position-adjusted images.

In the case shown in Fig. 4, the image region where the obstacle 310a appears and the image region where the obstacle 311a appears merge together into a merged region, which is extracted as a differential region. In a case where the vehicle 3 is traveling and a stationary or moving obstacle is present in the shooting range of the camera 2, or in a case where the vehicle 3 is stationary but an obstacle is moving in the shooting range of the camera 2, a differential region is extracted. In this case, the obstacle detector 13 feeds the danger evaluator 14 with obstacle presence/absence information indicating that an obstacle is present. In a case where the vehicle 3 is stationary and, although an obstacle is present in the shooting range of the camera 2, it is stationary, or in a case where, irrespective of whether the vehicle 3 is traveling or not, no obstacle is present in the shooting range of the camera 2, no differential region is extracted. In this case, the obstacle detector 13 feeds the danger evaluator 14 with obstacle presence/absence information indicating that no obstacle is present. Fig. 6 shows the structure of obstacle information, which contains obstacle presence/absence information. How the other information shown in Fig. 6 is generated will be described later.

Assuming that a differential region is extracted, the description of the function of the obstacle detector 13 will be continued. The obstacle detector 13 finds an optical flow in the differential region and, based on this optical flow, recognizes whether an obstacle appearing in the differential region is stationary or moving.

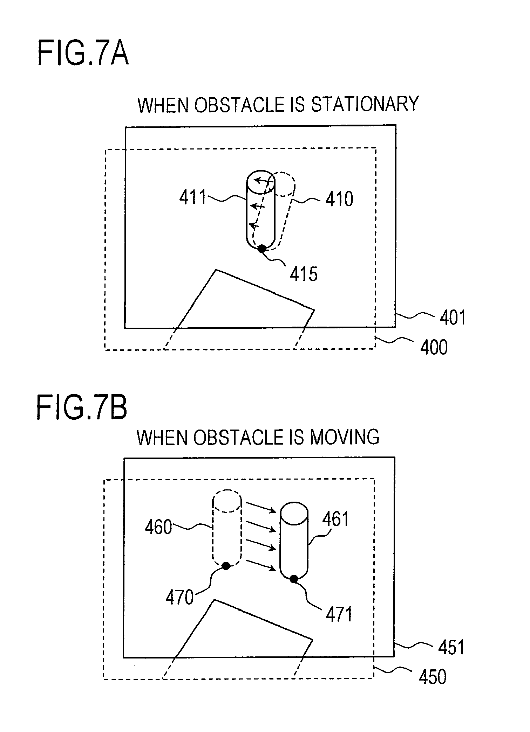

See Fig. 7A. Fig. 7A corresponds to a case where the obstacle is stationary. In Fig. 7A, broken lines 400 indicates the position-adjusted image at time point t, and solid lines 401 indicates the position-adjusted image at time point (t+1). The image region inside the broken lines indicated by reference sign 410 is the region where the obstacle appears in the position-adjusted image 400, and the image region inside the solid lines indicated by reference sign 411 is the region where the obstacle appears in the position-adjusted image 401. The differential region between the position-adjusted images 400 and 401 is the merged region into which the image regions 410 and 411 merge together.

In the case shown in Fig. 7A, the obstacle detector 13 finds an optical flow between the position-adjusted images 400 and 401 inside the differential region. An optical flow is a distribution of movement vectors representing the movement directions and movement distances of points on an object between currently considered images. An optical flow can be derived by a well-known method, for example the method disclosed in Japanese Patent No. 3435084. For example, a plurality of partial images (rectangular regions) effective in deriving an optical flow are extracted as a plurality of characteristic points; then the coordinates of the characteristic points mutually corresponding between the images currently targeted for optical flow derivation are found, and thereby an optical flow is found. Here the characteristic points are so set that there is no overlap among them. The characteristic points for optical flow derivation may be determined by a method similar to that by which the above-mentioned characteristic points for position adjustment are determined; alternatively, a grid (lattice) may be defined inside the differential region so that the intersections on the grid may be used as the characteristic points. In Fig. 7A, the arrows in the differential region represent the group of movement vectors (set of movement vectors) that forms the derived optical flow.

The obstacle detector 13 calculates, between the position-adjusted images 400 and 401, the distance of movement of the point (hereinafter "particular point") in the differential region nearest to the vehicle 3. The particular point may consist of a single pixel, or may be a rectangular or other region consisting of a plurality of pixels. In the example shown in Fig. 7A, the particular point as it appears in the position-adjusted image 400 coincides with the particular point as it appears in the position-adjusted image 401, and thus its distance of movement is zero. In Fig. 7A, the reference sign 415 indicates the particular point as it appears at an identical position.

In this embodiment, the camera 2 is fitted so as to point rearward-downward of the vehicle 3, and the bottom end of a bird's-eye-view image corresponds to the side to which the vehicle 3 is located. Accordingly, a point located at the bottom end of the differential region makes the particular point. When the up/down direction of a bird's-eye-view image is taken as the vertical direction, and it is assumed that, on a bird's-eye-view image, the closer a pixel is to the bottom end, the larger its vertical coordinate, then the point that has the largest vertical coordinate in the differential region makes the particular point. The rule here, like "the point having the largest vertical coordinate is taken as the particular point", is defined previously.

A bird's-eye-view image corresponds to an image having an image shot by the camera 2 projected onto a road surface. Thus, in principle, the particular point corresponds to the point at which an obstacle makes contact with the ground. Accordingly, the fact that there is no movement of the particular point between the position-adjusted images 400 and 401 as shown in Fig. 7A indicates that the obstacle is a stationary object.

Fig. 7B shows a position-adjusted image as observed when the obstacle is a moving object. In Fig. 7B, broken lines 450 indicate the position-adjusted image at time point t, and, and solid lines 451 indicate the position-adjusted image at time point (t+1). The image region inside the broken lines indicated by the reference sign 460 represents the region where the obstacle appears in the position-adjusted image 450, and the image region inside the solid lines indicated by the reference sign 461 represents the region where the obstacle appears in the position-adjusted image 451. The differential region between the position-adjusted images 450 and 451 is the merged region where the image regions 460 and 461 merge together.

In the example shown in Fig. 7B, the obstacle detector 13 finds the optical flow between the position-adjusted images 450 and 451 inside the differential region. In Fig. 7B, the arrows between the image regions 460 and 461 represent the group of movement vectors (set of movement vectors) that forms the thus derived optical flow.

In the example shown in Fig. 7B, the particular point 470 in the position-adjusted image 450 does not coincide with the particular point 471 in the position-adjusted image 451. The obstacle detector 13 calculates the distance of movement of the particular point between the position-adjusted images 450 and 451 (that is, the distance between the particular points 470 and 471 in the image space after position adjustment), and, based on this distance of movement, the obstacle detector 13 judges that the obstacle is a moving object.

In practice, for example, the obstacle detector 13 calculates the distance of movement of the particular point between the two position-adjusted images. If the distance of movement is smaller than a predetermined threshold value, the obstacle detector 13 judges that the obstacle appearing in the differential region is a stationary object, and feeds the danger evaluator 14 with stationary/moving object distinction information indicating that the obstacle is a stationary object. By contrast, if the distance of movement is equal to or larger than the threshold value, the obstacle detector 13 judges that the obstacle appearing in the differential region is a moving object, and feeds the danger evaluator 14 with stationary/moving object distinction information indicating that the obstacle is a moving object (see Fig. 6).

The direction of the movement vectors in the group of movement vectors forming the optical flow represents the direction of movement (hereinafter "relative movement direction") of the obstacle relative to the vehicle 3, and the magnitude of the movement vectors in that group of movement vectors represents the speed of movement (hereinafter "relative movement speed") of the obstacle relative to the vehicle 3. Based on the derived optical flow, the obstacle detector 13 identifies the relative movement direction and the relative movement speed, and feeds the danger evaluator 14 with obstacle movement direction information representing the identified movement direction and obstacle movement speed information representing the identified movement speed (see Fig. 6).

The position of the obstacle as observed on a bird's-eye-view image in which it appears represents the position of the obstacle relative to the vehicle 3 (hereinafter "relative position"). Based on the newest bird's-eye-view image, the obstacle detector 13 detects the position of the obstacle on that bird's-eye-view image, and feeds the danger evaluator 14 with relative position information representing the position of the obstacle (in other words, representing the just-mentioned relative position) (see Fig. 6). The position of the obstacle on a bird's-eye-view image can be represented, for example, by the coordinates of the above-mentioned particular point of the obstacle as observed on a currently considered bird's-eye-view image. These coordinates are coordinates as observed on a single bird's-eye-view image, and thus remain unchanged through position adjustment. When time points t and (t+1) are currently being considered, relative position information can be generated based on the position of the obstacle on the bird's-eye-view image before or after position adjustment at time point (t+1).

On the other hand, the size of the obstacle as observed on a bird's-eye-view image in which it appears is proportional to the size of the obstacle in the real space. Based on the newest bird's-eye-view image, the obstacle detector 13 detects the size of the obstacle on that bird's-eye-view image, and feeds the danger evaluator 14 with obstacle size information identifying the size of the obstacle (see Fig. 6). The size of the obstacle on a bird's-eye-view image can be represented, for example, by the area of the smallest rectangular region that encloses the obstacle on a bird's-eye-view image. This area remains unchanged through position adjustment. When time points t and (t+1) are currently being considered, obstacle size information can be generated based on that area on the bird's-eye-view image before or after position adjustment at time point (t+1).

**Danger Evaluator:** Next, the function of the danger evaluator 14 shown in Fig. 1 will be described. Based on obstacle information (see Fig. 6) including obstacle presence/absence information, stationary/moving distinction information, obstacle movement direction information, obstacle movement speed information, relative position information, and obstacle size information, the danger evaluator 14 shown in Fig. 1 evaluates the level of danger that the obstacle poses.

The level of danger mainly concerns with the danger of collision of the obstacle with the vehicle 3. The level of danger, for example, takes a value equal to or larger than zero, the value being the larger the higher the level of danger. The value indicating the level of danger is represented by D. When the obstacle presence/absence information indicates that there is no obstacle, the level of danger has the smallest value, namely zero. Now, assuming that the obstacle presence/absence information indicates that there is an obstacle, the method of evaluating (calculating) the level of danger will be described.

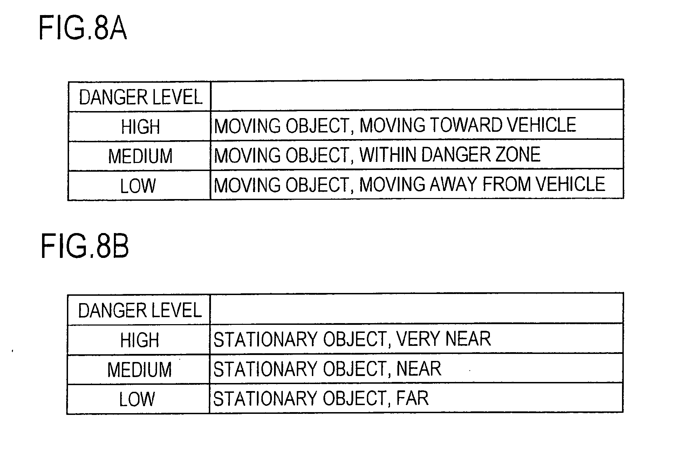

For example, with reference to the obstacle presence/absence information, the obstacle movement direction information, and the relative position information, the level of danger is evaluated according to rules as shown in Figs. 8A and 8B. In a case where the obstacle is a moving object, if, based on the obstacle movement direction information, the moving object is judged to be moving toward the vehicle 3, the level of danger is evaluated as "high". Even if the moving object is judged to be not moving toward the vehicle 3, if, based on the relative position information, the position (relative position) of the moving object is judged to be inside a predetermined danger zone on a bird's-eye-view image, the level of danger is evaluated as "medium". If, based on the obstacle movement direction information, the moving object is judged to be moving away from the vehicle 3, the level of danger is evaluated as "low".

In a case where the obstacle is a stationary object, the level of danger is evaluated based on the position (relative position) of the stationary object as identified based on the relative position information. For example, the image area of a bird's-eye-view image is divided into a nearest region, a near region, and a far region according to how they are located relative to the vehicle 3, and if the position (relative position) of the stationary object is in the nearest, near, and far regions on the bird's-eye-view image, the level of danger is evaluates as "high", "medium", and "low" respectively.

Here, it is assumed that, as the level of danger rises from "low" to "medium" to "high", the value of the level of danger increases. Whether to judge the moving object (obstacle) to be moving toward or away from the vehicle 3 when the relative movement direction of the obstacle is pointing in what direction is defined previously. In this embodiment, when the obstacle is moving toward a lower central part of a bird's-eye-view image, the moving object (obstacle) is judged to be moving toward the vehicle 3. The nearest, near, and far regions are so set that there is no overlap among them. The border lines across which the image region of a bird's-eye-view image is divided into the nearest, near, and far regions can be defined previously. In this embodiment, a lower central part of a bird's-eye-view image can be taken as the nearest region, an upper part of the bird's-eye-view image as the far region, and the region between the nearest and far regions as the near region.

Alternatively, for example, based on the obstacle information, the level of danger D may be calculated according to formula (2) below. Here, $k_1$ to $k_5$ are weight coefficients each taking a value equal to or larger than zero. Any one or more of these weight coefficients $k_1$ to $k_5$ may be zero.

$$D = k_1 \cdot E_1 + k_2 \cdot E_2 + k_3 \cdot E_3 + k_4 \cdot E_4 + k_5 \cdot E_5 \qquad (2)$$

$E_1$ is an evaluation value whose value varies according to whether the obstacle is a stationary or moving object. For example, the evaluation value $E_1$ takes a larger value when the obstacle is a moving object than when the obstacle is a stationary object.

$E_2$ is an evaluation value whose value varies according to the relative movement direction of the obstacle. For example, based on the relative movement direction, when the obstacle is judged to be moving toward the vehicle 3, $E_2 = E_{2A}$; when the obstacle is judged to be substantially stationary relative to the vehicle 3, $E_2 = E_{2B}$; and when the obstacle is judged to be moving away from the vehicle 3, $E_2 = E_{2C}$. Here, $E_{2A} > E_{2B} > E_{2C}$.

$E_3$ is an evaluation value whose value varies according to the relative movement speed of the obstacle. For example, when the relative speed as represented by the relative movement speed is larger than a first reference speed, $E_3 = E_{3A}$; when the relative speed is smaller than the first reference speed but larger than a second reference speed, $E_3 = E_{3B}$; and when the relative speed is smaller than the second reference speed, $E_3 = E_{3C}$. Here, $E_{3A} > E_{3B} > E_{3C}$, and the first reference speed is larger than the second reference speed.

$E_4$ is an evaluation value whose value varies according to the relative position of the obstacle. For example, in a case where the image region of a bird's-eye-view image is divided into a nearest, a near, and a far region according to how they are located relative to the vehicle 3, when the position (relative position) of the obstacle is within the nearest, near, and far regions on the bird's-eye-view image, the evaluation value $E_4$ is made equal to $E_{4A}$, $E_{4B}$, and $E_{4C}$ respectively. Here, $E_{4A} > E_{4B} > E_{4C}$.

$E_5$ is an evaluation value whose value varies according to the size of the obstacle as represented by the obstacle size information. For example, when the size of the obstacle is within a predetermined first size range, $E_5 = E_{5A}$; when the size of the obstacle is within a predetermined second size range, $E_5 = E_{5B}$; and when the size of the obstacle is neither within the first size range nor within the second size range, $E_5 = E_{5c}$. There is no overlap between the first and second size ranges, and $E_{5A} > E_{5B} > E_{5C}$. For example, the first size range is set based on the size of a human as it appears on a bird's-eye-view image, and is so set that, if a human as an obstacle is present in the shooting range of the camera 2, $E_5 = E_{5A}$. If an extraordinarily large obstacle is detected, an erroneous detection is suspected; on the other hand, an extremely small obstacle (such as a stone) should be evaluated to pose a low level of danger. Thus, the second size range is so set that, if an extraordinarily large or extremely small obstacle is detected, $E_5 = E_{5C}$.

**Warning Indicator:** Next, the function of the warning indicator 15 shown in Fig. 1 will be described. The warning indicator 15 shown in Fig. 1 sends off to the driver a warning indication according to the level of danger evaluated by the danger evaluator 14. An warning indication may be conveyed by any means; for example, one may be sounded audibly by use of an unillustrated loudspeaker, or one may be displayed visually by use of an unillustrated display device.

For example, the value D representing the level of danger is compared with predetermined threshold values $D_{TH1}$, $D_{TH2}$, and $D_{TH3}$. Here, $D_{TH1} > D_{TH2} > D_{TH3} > 0$. If $D > D_{TH1}$, the level of danger is judged to be "high" and a warning indication of a high level of danger is sent off; If $D_{TH1} > D > D_{TH2}$, the level of danger is judged to be "medium" and a warning indication of a medium level of danger is sent off; If $D_{TH2} > D > D_{TH3}$, the level of danger is judged to be "low" and a warning indication of a low level of danger is sent off; if $D_{TH3} > D$, no warning indication is sent off.

Different contents are sent off as the low-, medium-, and high-level danger warning indications. The contents of a warning indication include, in a case where one is displayed visually, what is displayed as the warning indication and, in a case where one is sounded audibly, the intensity and type of the sound with which the warning indication is sounded and the messages so sounded.

The driver is warned of increasingly high levels of danger with the low-, medium-, and high-level danger warning indications in this order. For example, in a case where the warning indications are sounded audibly, different sounds (in terms of the intensity and type of the sound and the messages sounded) are used as the low-, medium-, and high-level danger warning indications. For example, a low-level danger warning indication is simply displayed, a medium-level danger warning indication is displayed and simultaneously sounded with a comparatively low sound level, and a high-level danger warning indication is displayed and simultaneously sounded with a comparatively high sound level.

The contents of warning indications may be determined with particular attention paid to whether the obstacle is a stationary or moving object. In that case, whenever necessary, obstacle information is fed to the warning indicator 15. For example, different contents are sent off as warning indications according to whether the obstacle is a stationary or moving object.

**Vehicle Travel Condition Estimator:** Next, the function of the vehicle travel condition estimator 16 shown in Fig. 1 will be described. The vehicle travel condition estimator 16 shown in Fig. 1 receives the movement vectors derived by the position adjuster 12. These movement vectors represent the direction and speed of travel of the vehicle 3. Thus, based on the movement vectors, the vehicle travel condition estimator 16 can estimate the direction and speed of travel of the vehicle 3. The vehicle travel condition estimator 16 accumulates the movement vectors that are derived every time the position adjuster 12 performs position adjustment and, based on the thus accumulated movement vectors, estimates the travel condition (that is, the travel direction and travel speed) of the vehicle 3. The result of the estimation here is fed to the position adjuster 12.

Based on the estimated travel condition of the vehicle 3, the position adjuster 12 imposes a restriction as a condition for the position adjustment that will be performed next time or later. For example, suppose that, from the movement vectors calculated between two bird's-eye-view images before time point t, the position adjuster 12 or the vehicle travel condition estimator 16 estimates that, "before time point t, the vehicle 3 has been traveling straight backward at a fixed speed".

When another unit length of time passes, the position adjuster 12 performs position adjustment between the two bird's-eye-view images at time points t and (t+1). Here, considering the characteristics of the vehicle 3, it is hardly imaginable that the vehicle 3, which has thus far been traveling straight backward at a fixed speed, can suddenly change its direction to start to travel forward or sharply change its speed from the fixed speed.

In view of this, a restriction is imposed as a condition for position adjustment so as to prevent the movement vectors for position adjustment between the two bird's-eye-view images at time points t and (t+1) from becoming those indicating that the vehicle 3 is traveling forward between time points t and (t+1) or those indicating that the speed of the vehicle 3 between time points t and (t+1) is abnormal (greatly different from the fixed speed). That is, a restriction is imposed on the direction and distance in and over which the bird's-eye-view image at time point (t+1) is translated, for position adjustment, relative to the bird's-eye-view image at time point t based on the travel condition of the vehicle 3. This reduces the incidence of erroneous position adjustment, and hence minimizes erroneous detection of an obstacle.

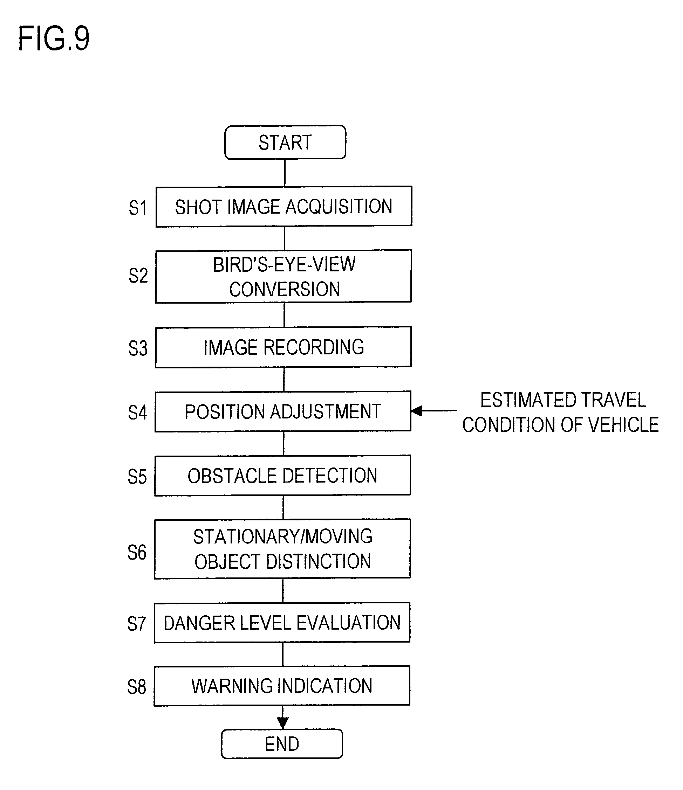

**Operation Flow:** Next, with reference to Fig. 9, the overall flow of operations in the vehicle surroundings monitoring apparatus 1 shown in Fig. 1 will be described. Fig. 9 is a flow chart of the flow of operations.

First, shot images are acquired from the camera 2 (step S1). Then, the point-of-view converter 11 performs bird's-eye-view conversion to produce bird's-eye-view images (step S2). The produced bird's-eye-view images are stored on an unillustrated frame memory (and, wherever necessary, on a nonvolatile recording medium) (step S3). Next, referring to what is stored on the frame memory, the position adjuster 12 performs position adjustment between two temporally consecutive bird's-eye-view images (step S4). Here, as described previously, the result of the estimation of the travel condition of the vehicle 3 by the vehicle travel condition estimator 16 is referred to. Next, referring to the result of the position adjustment by the position adjuster 12, the obstacle detector 13 detects an obstacle and recognizes whether the obstacle is a stationary or moving object (steps S5 and S6). Next, based on the result of the detection by the obstacle detector 13, the danger evaluator 14 evaluates the level of danger (step S7). Then, according to the evaluated level of danger, the warning indicator 15 sends off a warning indication (step S8). These operations (steps S1 to S8) are performed sequentially and repeatedly.

**Advantages over Conventional Methods:** In comparison with the conventional methods described earlier, the vehicle surroundings monitoring apparatus 1 of the embodiment offers the following advantages.

The conventional methods described earlier can all detect an obstacle, but cannot distinguish whether the obstacle is stationary or moving. Any obstacle present on the road surface on which a vehicle is traveling is recognized as a danger. Thus, normally, it is no problem to detect such an obstacle as a danger irrespective of whether it is stationary or moving and send off a warning indication.

However, in situations like where a vehicle is being parked against a wall or fence or a vehicle is traveling closely by a telephone pole through a narrow path, it is better to be able to distinguish whether an obstacle is stationary or moving. In such situations, a stationary object is constantly detected as an obstacle. When, in such a situation, a pedestrian, a cyclist, or another vehicle newly approaches one's own vehicle, if it is impossible to distinguish whether an obstacle being detected is the existing one or a newcomer, there is no choice but simply continue to send off the same warning indication.

By contrast, the vehicle surroundings monitoring apparatus 1 of the embodiment can detect an obstacle and distinguish whether it is a stationary or moving object; thus it can send off different warning indications according to whether the detected obstacle is a stationary or moving object. This makes it possible to furnish the driver with more detailed information on an obstacle, contributing to further assistance in safety confirmation.

Moreover, whereas the first and second conventional methods described earlier require a dedicated sensor, the vehicle surroundings monitoring apparatus 1 requires none, contributing to reduced cost etc. Accordingly, there no longer occurs erroneous detection ascribable to an error originating from such sensor.

Incidentally, with a stereo camera, it is possible to measure the distance to an obstacle and the surface shape of the obstacle. If, however, there is a wall or the like in the background of the obstacle, it is difficult to identify the obstacle (especially when it has a color similar to that of the wall). Moreover, to be able to distinguish whether a detected obstacle is stationary or moving, it is necessary to follow the detected object, and thus, when one's own vehicle is travailing, it is necessary to take its movement into consideration. This makes it difficult to distinguish whether the obstacle is stationary or moving.

**Modifications and Variations**

In connection with the embodiments described above, modified examples or supplementary explanations will be given below in Notes 1 and 2. Unless inconsistent, any part of the contents of these notes may be combined with any other.

**Note 1:** The vehicle surroundings monitoring apparatus 1 shown in Fig. 1 may be, for example, incorporated in, as part of, a car navigation system (unillustrated) of a vehicle 3.

**Note 2:** The vehicle surroundings monitoring apparatus 1 shown in Fig. 1 can be realized in hardware, or in a combination of hardware and software. All or part of the functions to be realized by the vehicle surroundings monitoring apparatus 1 may be prepared in the form of a computer program so that those functions are, wholly or partly, realized as the program is executed on a program execution apparatus (for example, a computer).

**Claims**

1. A vehicle surroundings monitoring apparatus, comprising:

   a point-of-view converter converting an image shot with a camera installed on a vehicle into a bird's-eye-view image through point-of-view conversion;
   a position adjuster performing position adjustment between two bird's-eye-view images produced from two images shot at different time points, the position adjuster performing the position adjustment based on the two bird's-eye-view images; and
   a three-dimensional object detector detecting a three-dimensional object around the vehicle based on differences between the two bird's-eye-view images having undergone the position adjustment.

2. The vehicle surroundings monitoring apparatus according to claim 1,
   wherein, when, in each of the two bird's-eye-view images, a region thereof where a subject comparatively far from the vehicle appears is called a first image region and a region thereof where a subject comparatively near to the vehicle appears is called a second image region,
   the position adjuster excludes, from image data with which it performs the position adjustment between the two bird's-eye-view images, image data of the first image region of each of said images, and performs the position adjustment between the two bird's-eye-view images based on image data of the second image region of each of said images.

3. The vehicle surroundings monitoring apparatus according to claim 1 or 2,
   wherein, based on the differences between the two bird's-eye-view images having undergone the position adjustment, the three-dimensional object detector not only detects the three-dimensional object but also recognizes whether the three-dimensional object is a stationary or moving object.

4. The vehicle surroundings monitoring apparatus according to claim 3,
   wherein, based on the differences, the three-dimensional object detector identifies a three-dimensional object region where the three-dimensional object appears in each of the two bird's-eye-view images having undergone the position adjustment and, based on a distance of movement of a particular point in the three-dimensional object region between the two bird's-eye-view images having undergone the position adjustment, recognizes whether the three-dimensional object is a stationary or moving object.

5. The vehicle surroundings monitoring apparatus according to claim 4,
   wherein the particular point is a point in the three-dimensional object region nearest to the vehicle.

6. The vehicle surroundings monitoring apparatus according to any one of claims 3 to 5, further comprising:

   a warning indicator sending off a warning indication based on a result of detection by the three-dimensional object detector,

   wherein the warning indicator sends off different warning indications depending on whether the detected three-dimensional object is a stationary or moving object.

7. The vehicle surroundings monitoring apparatus according to any one of claims 3 to 5, further comprising:

   a danger evaluator evaluating a level of danger that the three-dimensional object poses to the vehicle; and
   a warning indicator sending off a warning indication according to the evaluated level of danger,

   wherein the danger evaluator evaluates the level of danger based on one or more of
   a result of recognizing whether the three-dimensional object is a stationary or moving object,
   a direction of movement of the three-dimensional object relative to the vehicle as detected on the two bird's-eye-view images having undergone the position adjustment,
   a speed of movement of the three-dimensional object relative to the vehicle as detected on the two bird's-eye-view images having undergone the position adjustment,

a position of the three-dimensional object relative to the vehicle as detected on a bird's-eye-view image in which the three-dimensional object appears, and

a size of the three-dimensional object as observed on a bird's-eye-view image in which the three-dimensional object appears.

**8.** The vehicle surroundings monitoring apparatus according to any one of claims 1 to 7, further comprising:

a vehicle travel condition estimator estimating travel condition of the vehicle based on a result of the position adjustment that the position adjuster has performed on the two bird's-eye-view images,

wherein the position adjuster, when performing position adjustment on another two bird's-eye-view images acquired after acquisition of the two bird's-eye-view images, imposes as a condition for the position adjustment of the newly acquired two bird's-eye-view images a restriction according to the estimated travel condition.

**9.** A vehicle comprising the vehicle surroundings monitoring apparatus according to any one of claims 1 to 8.

**10.** A vehicle surroundings monitoring method, comprising:

converting an image shot with a camera installed on a vehicle into a bird's-eye-view image through point-of-view conversion;

performing position adjustment between two bird's-eye-view images produced from two images shot at different time points, the position adjustment being performed based on the two bird's-eye-view images; and

detecting a three-dimensional object around the vehicle based on differences between the two bird's-eye-view images having undergone the position adjustment.

# FIG.1

EP 1 964 719 A2

## FIG.2A

## FIG.2B

FRONTWARD

## FIG.3

TIME POINT t 200

TIME POINT (t+1) 201

SHOT IMAGES

210

211

220

221

BIRD'S-EYE-VIEW IMAGES

300

301

310

311

320

321

## FIG.4

BIRD'S-EYE-VIEW IMAGES AFTER POSITION ADJUSTMENT

310a

311a

302

301

300

## FIG.5

TIME POINT t    300

330F {

310 ~ 

340

330N {

320 ~ 

TIME POINT (t+1)    301

331F {

311 ~ 

341

331N {

321 ~ 

## FIG.6

| OBSTACLE INFORMATION | OBSTACLE PRESENCE/ABSENCE INFORMATION |
| --- | --- |
| | STATIONARY/MOVING OBJECT DISTINCTION INFORMATION |
| | OBSTACLE MOVEMENT DIRECTION INFORMATION |
| | OBSTACLE MOVEMENT SPEED INFORMATION |
| | RELATIVE POSITION INFORMATION |
| | OBSTACLE SIZE INFORMATION |

# FIG.7A

WHEN OBSTACLE IS STATIONARY

411 ~ 410

415

~ 401

400

# FIG.7B

WHEN OBSTACLE IS MOVING

460 461

470

471

451

450

## FIG.8A

| DANGER LEVEL | |
|---|---|
| HIGH | MOVING OBJECT, MOVING TOWARD VEHICLE |
| MEDIUM | MOVING OBJECT, WITHIN DANGER ZONE |
| LOW | MOVING OBJECT, MOVING AWAY FROM VEHICLE |

## FIG.8B

| DANGER LEVEL | |
|---|---|
| HIGH | STATIONARY OBJECT, VERY NEAR |
| MEDIUM | STATIONARY OBJECT, NEAR |
| LOW | STATIONARY OBJECT, FAR |

## FIG.9

```
                    ┌──────────────┐
                    │    START     │
                    └──────────────┘
                           │
        ┌──────────────────────────────────────┐
   S1   │       SHOT IMAGE ACQUISITION          │
        └──────────────────────────────────────┘
                           │
        ┌──────────────────────────────────────┐
   S2   │         BIRD'S-EYE-VIEW               │
        │          CONVERSION                   │
        └──────────────────────────────────────┘
                           │
        ┌──────────────────────────────────────┐
   S3   │         IMAGE RECORDING               │
        └──────────────────────────────────────┘
                           │
        ┌──────────────────────────────────────┐              ESTIMATED TRAVEL
   S4   │       POSITION ADJUSTMENT             │◀──────    CONDITION OF VEHICLE
        └──────────────────────────────────────┘
                           │
        ┌──────────────────────────────────────┐
   S5   │        OBSTACLE DETECTION             │
        └──────────────────────────────────────┘
                           │
        ┌──────────────────────────────────────┐
   S6   │        STATIONARY/MOVING              │
        │        OBJECT DISTINCTION             │
        └──────────────────────────────────────┘
                           │
        ┌──────────────────────────────────────┐
   S7   │      DANGER LEVEL EVALUATION          │
        └──────────────────────────────────────┘
                           │
        ┌──────────────────────────────────────┐
   S8   │        WARNING INDICATION             │
        └──────────────────────────────────────┘
                           │
                           ▼
                    ┌──────────────┐
                    │     END      │
                    └──────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3494434 B
- JP 3463858 B
- JP 2006287892 A
- JP H3099952 A
- JP 2006148745 A
- JP 3435084 B